# EUROPEAN PATENT SPECIFICATION

(11) **EP 1 217 850 B1**
(45) Date of publication and mention of the grant of the patent: **24.01.2007**
(21) Application number: 01130064.7
(22) Date of filing: 18.12.2001
(51) Int. Cl.: H04Q 7/32

(54) **Method for permitting debugging and testing of software on an mobile communication device in a secure environment**
Verfahren zum Ermöglichen der Prüfung und Fehlerbeseitigung von Software an einem mobilen Kommunikationsgerät in einem sicheren Umfeld
Procédé destiné à permettre le test et le débogage de logiciel à un appareil de communication mobile dans un environnement sécurisé

(30) Priority: 20.12.2000 US 745061
(43) Date of publication of application: 26.06.2002
(73) Proprietor: MOTOROLA, INC., Schaumburg, IL 60196 (US)
(72) Inventor: Lin, Jyh-Han, Coral Springs, Florida 33076 (US); Geiger, Robert L., Sunnyvale, California 94085 (US); Wang, Alex C., Plantation, Florida 33324 (US); Wanchoo, Sanjay, Lauderhill, Florida 33351 (US); Chan, Alan W., Sunrise, Florida 33323 (US); Smith, Ronald R., Coral Springs, Florida 33071 (US)
(74) Representative: Openshaw, Paul Malcolm

(56) References cited:
- EP-A- 0 813 132
- EP-A- 0 997 807
- EP-A- 1 033 652
- WO-A-00/59149
- WO-A-98/36356
- US-A- 5 261 002
- PATENT ABSTRACTS OF JAPAN vol. 1999, no. 12, 29 October 1999 (1999-10-29) & JP 11 174956 A (INTERNATL BUSINESS MACH CORP <IBM>), 2 July 1999 (1999-07-02)

## Description

### Technical Field

This invention relates in general to software authentication for mobile communication devices, and more particularly to debugging and testing software application code in a secure environment.

### Background of the Invention

Mobile communication devices are in widespread use, particularly in metropolitan areas. Traditionally these devices have been used for voice communication, but as computing power becomes more affordable, these devices are evolving. Already there are mobile communication devices that are capable of browsing information on the Internet with a "microbrowser". Content providers and web site operators are providing content specifically for these devices in a format that is readable by the microbrowser. Furthermore, microbrowsers are becoming more sophisticated, and are capable of executing portable code, such as JAVA applets. As a result, parties other than the manufacturer of the mobile communication device have the ability to develop software to be executed by the mobile communication device. This presents a few problems.

As with more conventional desktop or personal computer platforms, the mobile communication device is susceptible to poorly designed code, or worse, code designed to accomplish some malicious purpose. To prevent problems associated with such code, a security scheme has been adopted similar to that used by personal computers. The mobile communication device is provided with a root key, which may be, for example, the public key of a trusted authority which is part of a public key infrastructure. There are companies which specialize in this service, and perform verification services so that a developer can distribute their software in a manner in which those who download the software can be assured that the code is authentic, and has not been altered. It would be preferable to have this security feature active all the time, this has presented a problem with developers because they frequently test many versions of the code during development, and having to obtain certificates for each incremental version impedes the efficiency of the development process.

Presently there are two conventional solutions to this problem. One is the use of a mobile communication device with a special software load for developers in which the security has been disabled. This is undesirable because the device is then not representative of an actual users device. It is preferable to have an environment representative of the target device to facilitate debugging and development. Another conventional solution is to allow the security to be disabled. This might require a special sequence of buttons to enable or disable. However, this gives the ability of anyone who knows how the ability to disable the security. Since mobile communication devices use a shared resource, a flawed or maliciously designed software application could affect many other users.

EP-A-1 033 652 discloses a telephone system and a method for downloading software from a server to a terminal, the method comprising the steps of attaching to the software a certificate confirming the authenticity of the software and the loader; downloading the software from a source computer to the server; and downloading the software from the server to the terminal. A first electronic signature confirming the authenticity of the software is attached to the software at the server. After the software is downloaded, a second electronic signature is generated at the terminal from the loaded software and the authenticity of the software is checked by comparing the first electronic signature with the second.

Therefore there is a need for a security scheme that is always active, yet allows flexibility for developers without unduly hindering development efforts.

### Summary of the Invention

The present invention provides a method for testing different versions of software in a mobile communication device having a secure software environment, as claimed in claim 1.

### Brief Description of The Drawings

FIG. 1 shows a block diagram of a wireless communication system interfaced with the Internet, in accordance with the invention;
FIG. 2 shows a block diagram of a mobile communication device and associated software security architecture; and
FIG. 3 shows a sequence chart for downloading an application signed with a debug certificate, in accordance with the invention.

### Detailed Description of a Preferred Embodiment

While the specification concludes with claims defining the features of the invention that are regarded as novel, it is believed that the invention will be better understood from a consideration of the following description in conjunction with the drawing figures, in which like reference numerals are carried forward. A brief description of the prior art is also thought to be useful.

The invention solves the problem of testing and debugging code in a mobile communication device working on a live system and having a secure environment by eliminating the need to generate a new certificate with every version or build of code to be tested. Instead, the present invention provides a way of generating a multi-use certificate that a code developer can use to sign different versions or builds of code, and have them properly authenticated, without generating a new certificate for each new version or build of code to be tested. The present invention accomplishes this by use of a new class of certificate referred to as a development certificate. The development certificate specifies the machine it is to be used with, such as by specifying the international mobile equipment identifier of a mobile communication device, for example, and specifying a development parameter. The development parameter can specify the time period of use, the number of uses, and so on. Using the newly developed type of certificate, a developer can specify the particular mobile communication device on which the code is to be tested, obtain a development certificate from a public key infrastructure provider such as a certificate authority, and test several versions of the code being developed, on a live system, with device which has the same security environment as one sold into retail channels.

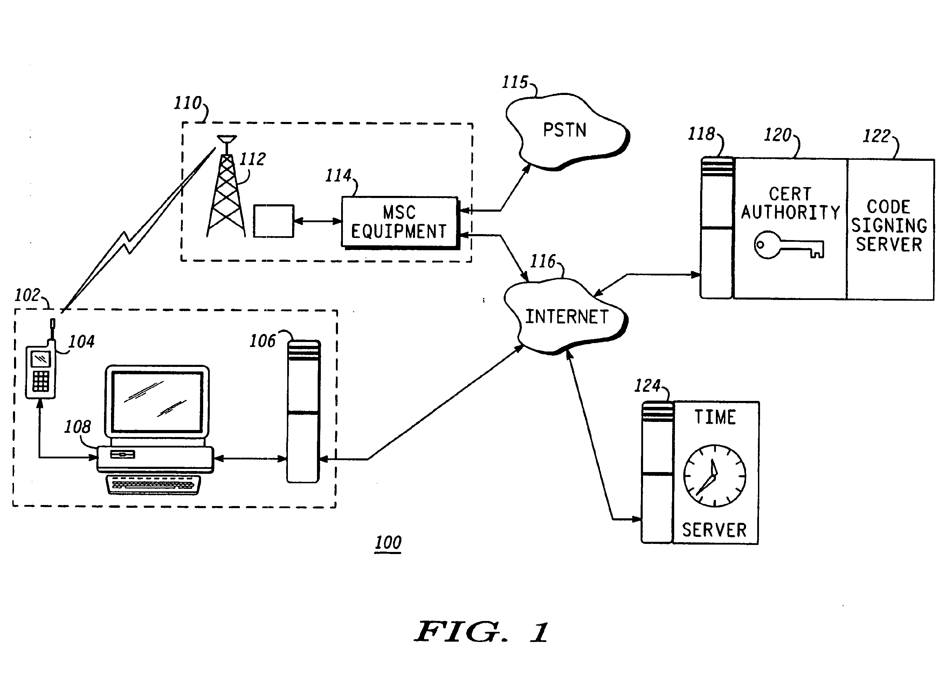

Referring now to FIG. 1, there is shown therein a block diagram 100 of a wireless communication system connected to the Internet, in accordance with the invention. A software developer's office 102, of a developer which desires to develop a software application or other code for use in a mobile communication device 104, includes the mobile communication device 104, a server 106 and preferably a local computer 108. The mobile communication device 104, is, for example, a mobile radio telephone or a cellular telephone, and communicates with mobile or wireless infrastructure equipment 110. The mobile communication device contains certain computer resources such as scratch pad memory (random access), non-volatile storage, operating system software, other application processing code, means for transmitting and receiving radio signals, power source means, user interface and ergonomic software layers, and display means and keypad means for displaying and entering information, respectively, among other computer resources. In the non-volatile memory there is stored a device identifier, such as an international mobile equipment identifier (IMEI) as is well known in the art, and a root key for authenticating code developed by third parties. The mobile communication device further comprises wireless network interface means, such as that used to establish and maintain packet data communication, and content browsing means such as a microbrowser for browsing content on the Internet. With the browsing means there is included a security means, in software, for preventing unauthorized access to protected computing resources, such as, for example, a Java or virtual machine software execution environment.

The wireless infrastructure 110 includes a base station 112, and typically a plurality of such base stations, for establishing serving cells within the vicinity of each such base station, as is well known in the art. Each such base station is operatively coupled to a mobile switching center (MSC) 114, and other switching equipment included therein. The MSC facilitates telephone interconnect calling and is operatively coupled to a public switched telephone network (PSTN) 115. The MSC or related equipment is also operatively coupled to a wide area public network, such as the Internet 116. Typically the link between the mobile infrastructure equipment and the wide area public network is a standard transport link, and uses, for example, TCP/IP, as is common, and uses a gateway located at the MSC, as is know in the art. Various equivalent arrangements exist for coupling the wireless infrastructure to networks to facilitate use of those networks by the mobile communication device.

To facilitate security operations in the mobile communication device 104, a public key infrastructure service provider has a machine or server 118 operatively coupled to the Internet, and is such that other machines operatively coupled to the Internet can transact with the server 118. Generally, such service providers provide encryption technologies such as public keys and authentication services including digital encryption certificates and code signing services for use by software and code developers. Such products and services are used by target devices to verify the authenticity of software and code obtained over public networks. These services are presently in widespread use, and provided by companies such as Verisign, Inc., which can be found on the Internet with the uniform resource locator (URL)of www.verisign.com. Preferably, included at the public key infrastructure service provider is a certificate authority server 120 and a code signing server 122. These are also transactable with other machines over the public network.

A secure time server 124 is also provided, and operatively coupled to the public network. Other machines transact with the secure time server to obtain authentic time stamps or readings, or both. In other words, when a machine coupled to the public network needs to verify the present time, it sends a request to the secure time server for the present time, which may include the present date. The time server then responds by sending an encrypted time reading back to the requesting machine. The requesting machine then decrypts the time reading using a public key of the time server, which has been previously provided to the requesting machine. In some instances the secure time server may be included with, and operated by the public key infrastructure service provider, and coupled to the server 118. In which case the public key for the time server could be the same as that of the public key infrastructure service provider. Such time servers are known in the art.

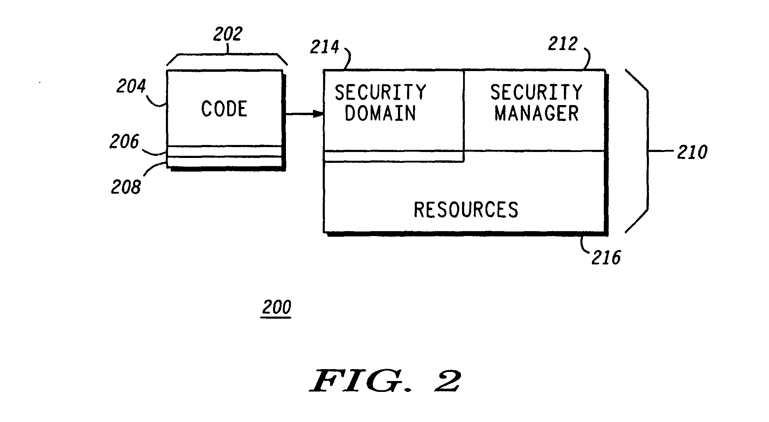

FIG. 2 shows a block diagram of a mobile communication device's associated software security architecture 200. The mobile communication device under consideration here is one used by a code developer to test and debug software and code developed by the developer. A software or code package 202 is obtained by the mobile communication device, and is meant to be installed in the mobile communication device. The software package includes the executable code 204, a descriptor file 206, and a development certificate 208. The development certificate, in accordance with the invention, comprises a device identifier of the particular mobile communication device, which is unique to the particular mobile communication device, and a development parameter. The development parameter is a parameter chosen by the developer to indicate under what conditions the development certificate is valid. For example, the development parameter may be a limited period of time, a preselected number of instantiations of the code to be tested, the number of versions which may be tested under the development certificate, and so on. It is also specifically contemplated that the development parameter may include a download counter or counter value to control the number of times the software application may be downloaded and installed into the machine. In the course of development, several slightly different versions may be tested. The development certificate is created in accordance with the method of the invention described hereinbelow. The mobile communication device comprises a software execution environment 210, including a security manager, a security domain, and resources 216 including physical, software, and data resources. The security manager is a software layer that assigns permissions to code that is installed into the mobile communication device, and either allows or denies use of resources by code that is installed. If a code segment or application does not have appropriate certification, the security manager denies use of all resources to prevent corruption of the resources or code being executed. The security domain is the set of resources which a particular code segment or application is allowed to access. The security domain may therefore be different for different applications, depending on which resources the application needs access to, and whether or not the application is properly authenticated with, for example, public key cryptography. The security domain necessary to properly execute the application is provided in the software code package 202 in a security policy described in the descriptor file 206. Once the software package is authenticated, the security manager can set the permissions appropriately, in accordance with the security policy

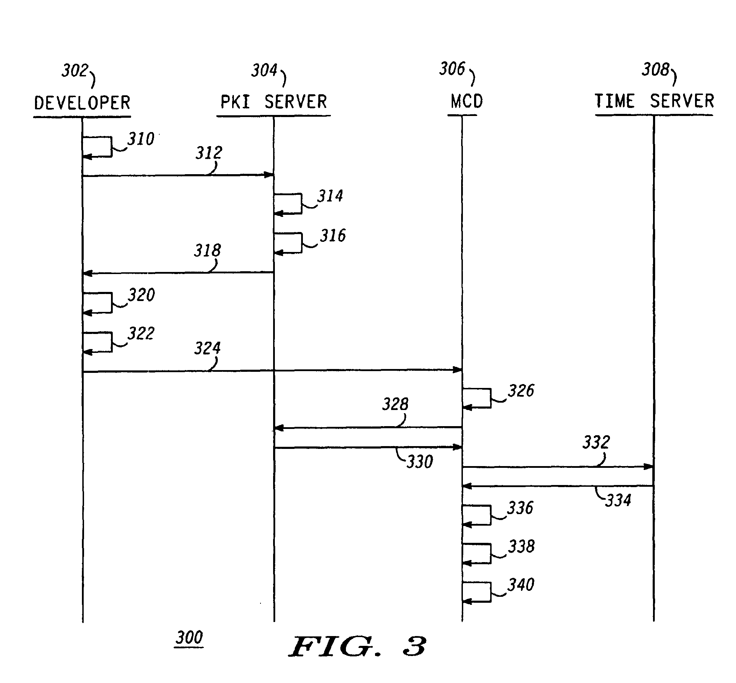

The software package 202 of FIG. 2 is generated, loaded, authenticated, and installed as described in FIG. 3, which shows a sequence chart 300 for downloading an application signed with a debug certificate, in accordance with the invention. The four main entities involved are the developer 302, a public key infrastructure (PKI) server 304, the mobile communication device 306, and optionally a time server 308. The procedures described herein include both a method for testing software on a portable device, and a method for permitting debugging and testing of software on a mobile communication device.

The process starts at the developer 302, who generates code (310) that needs to be tested and or debugged. The code is typically developed on a general purpose computer or workstation, such as that indicated in FIG. 1 as a local computer 108. When the developer is ready to load the code, which may be an application or some other software entity, the developer sends or otherwise transmits a request (312) for a development certificate to the PKI server 304. The PKI server is operated and controlled by a public certificate authority. The request includes a device identifier which is a unique identifier of the particular portable device or mobile communication device on which the code will be loaded and tested, and a developer's identifier to permit authentication of the developer. The request also includes a development parameter and the developers digital identification. The development parameter is included to limit the validity of the development certificate. The PKI server authenticates the request (314) by, for example, authenticating the digital signature of the developer. Upon successfully authenticating the developer's request, the PKI server creates the development certificate (316). The development certificate includes the device identifier and the development parameter. These data entities are made secure with appropriate cryptographic techniques such as one way hashes, for example.

Once the development certificate is generated, the public certificate authority's PKI server sends or transmits it back to the developer, who receives it at their office (318). The developer then signs the code or software application to be tested with the development certificate (320), thereby providing a signed software application. Typically the software will be in an archive format, such as a Java archive, or JAR file, with the application itself being in byte code for portability among platforms. The signed software application is then loaded onto a server (322), such as the developer's server 106 of FIG. 1. At this point the mobile communication device is ready to load the software. This can be done in by one of two ways, either use if a cable between the computer on which the signed software application resides, or over the air. Loading the signed software application (324) can be initiated by either the target mobile communication device, or by the developer if desired. Once the mobile communication device receives the signed software application, it decrypts the certificate (326) and commences authenticating the developer's signature (328, 330), including verifying the device identifier. If the device identifier does not match the device identifier of the mobile communication device, the software package may be discarded. The authentication is done over the air interface using a network connection and the gateway for the wireless system infrastructure 110. If the development parameter specifies a time period of validity, the mobile communication device can then the mobile communication device requests a signed time reading (332) from a trusted time server, which sends back a (334) signed or stamped time reading. The mobile communication device then verifies the time reading (336). The mobile communication device also creates and stores a hash of the development parameter (338) for use with subsequently loaded versions of the software. This hash is stored in non volatile memory. The security permissions are then set according to the descriptor file 206, and the application can then be installed (340). The development parameter used is a number of times the code may be executed, each time the code is called, it will increment a count of the number of times it has been called, keep this count in a cryptographically secure format in the mobile communication device's non-volatile memory, and check it each time the software is called to determine if the software can still be used. The same is true for other development parameters that may be used such as validity period, for example. Each time the software is called, the development parameters are checked against the present condition of those parameters to determine if the development certificate is still valid. If not, then execution of the software is immediately aborted. Therefore, execution of the software commences only if the device identifier of the development certificate matches the device identifier of the portable device or mobile communication device, and the development parameter is likewise valid. The invention further embodies a method of generating a development certificate for use in testing a software application in a mobile communication device. The method comprises receiving, at a public certificate authority, request from a developer for a development certificate. The request will include a device identifier and a development parameter, and is signed with, for example, the public key of the developer. The public certificate authority then generates the development certificate, and includes the device identifier and development parameter.

Thus, the problem of the developer having to request a certificate for each incremental version of a software entity, for testing and/or debugging, is obviated by use of the development certificate which is reusable for as many versions as the developer wants, for a period of time, or for a predetermined number of instantiations of the code in the executable environment of the portable device or mobile communication device, or a combination of several such parameters. The developer can reuse the same development certificate for different versions of the software to be tested, and it will be installed and executed by the target device so long as the device identifier and development parameter are valid. This facilitates rapid development while maintaining the security measures of the software environment in the portable device. The process makes use of a development parameter or parameters, in conjunction with specifying a unique identifier of the portable device, and cryptographic techniques used for authentication and monitoring the usage of the software by the portable device. The portable device itself maintains certain variables to keep track of the use and instantiations of the software, when needed, to determine whether or not further execution is permitted. While the preferred embodiments of the invention have been illustrated and described, it will be clear that the invention is not so limited.

## Claims

1. A method for testing different versions of software (204) in a mobile communication device (104, 306) having a secure software environment, the mobile communication device (104, 306) having a device identifier and a root key of a public certificate authority, the method comprising:
sending (312) a request for a multi-use development certificate (208) to the public certificate authority (118, 120, 304), the request including the device identifier and being signed with a developer's certificate including a developer identifier, the sending performed by a software developer (102, 302);
receiving (318) the multi-use development certificate at the software developer, the multi-use development certificate specifying the developer identifier, a development parameter, and the device identifier;
signing (320) a software application (204) to be tested in the mobile communication device (104, 306) with the multi-use development certificate, thereby providing a H signed software application (202);
loading (324) the signed software application onto the mobile communication device;
authenticating (328, 330) the multi-use development certificate with the public certificate authority (118, 120, 304), performed by the mobile communication device;
executing (340) the software application only if the device identifier of the multi-use development certificate matches the device identifier of the mobile communication device, and the development parameter is valid; and
wherein signing the software application, loading the signed software application, authenticating the multi-use certificate, and executing the signed software application are repeated for successive versions of the software application.

2. A method for testing different versions of software in a mobile communication device (104, 306) as defined by claim 1, wherein the development parameter includes a validity period, the authenticating includes authenticating the validity period.

3. A method for testing different versions of software in a mobile communication device (104, 306) as defined by claim 1, wherein the development parameter includes a download counter, the authenticating includes determining if the download counter has been exceeded.

4. A method for testing different versions of software in a mobile communication device (104, 306) as defined by claim 1, wherein the loading is performed over an air interface between the mobile communication device (104, 306) and a wireless communication system (110).

5. A method for testing different versions of software in a mobile communication device (104, 306) as defined by claim 1, the mobile communication device (104, 306) having a secure software environment and a device identifier, the method further comprising:
generating (316) the multi-use development certificate (208) for the mobile communication device (104, 306) in response to the request (312), the multi-use development certificate including the device identifier and the development parameter, the generating performed by a public certificate authority (118, 304).

6. A method for testing different versions of software in a mobile communication device (104, 306) as defined by claim 5, wherein the generating comprises including a validity period for the multi-use development certificate in the development parameter, the authenticating includes authenticating the validity period.

7. A method for testing different versions of software in a mobile communication device (104, 306) as defined by claim 5, wherein the generating comprises including a time of day period for the multi-use development certificate in the development parameter, the authenticating includes authenticating the time of day.

8. A method for testing different versions of software in a mobile communication device (104, 306) as defined by claim 5, wherein the generating comprises including a download counter for the multi-use development certificate in the development parameter, the authenticating includes determining if the download counter has been exceeded.

9. A method for testing different versions of software in a mobile communication device (104, 306) as defined by claim 5, wherein the loading is performed over an air interface between the portable device and a wireless communication system (110).

10. A method for testing different versions of software in a mobile communication device (104, 306) as defined by claim 5 wherein the generating comprises generating the multi-use development certificate when the device identifier is an international mobile equipment identifier of the mobile communication device.

## Patentansprüche

1. Verfahren zum Prüfen verschiedener Versionen von Software (204) in einer mobilen Kommunikationsvorrichtung (104, 306), die über eine sichere Softwareumgebung verfügt, wobei die mobile Kommunikationsvorrichtung (104, 306) über einen Vorrichtungsidentifizierer und einen Lösungsschlüssel von einer Öffentlichen Zertifizierungseinrichtung verfügt, wobei das Verfahren umfasst:
Senden (312) einer Anforderung für ein Menrzweckentwicklungszertifikat (208) an die öffentliche Zertifizicrungseinrichtung (118, 120, 304), wobei die Anforderung den Vorrichtungsidentifizierer umfasst und mit einem Entwicklerzertifikat signiert ist, das einen Entwickleridentifizierer umfasst, wobei das Senden durch einen Softwareentwickler durchgeführt wird (102, 302);
Empfangen (318) des Mehrzweckentwicklungszertifikates bei einem Softwareentwickler, wobei das Mehrzweckentwicklungszertifikat den Entwickleridentifizierer, einen Entwicklungsparameter und den Vorrichtungsidentifizierer spezifiziert;
Signieren (320) einer Softwareanwendung (204), die in der mobilen Kommunikationsvorrichtung (104, 306) mit dem Mehrzweckentwicklungszertifikat zu prüfen ist, wodurch eine signierte Softwareanwendung (202) zur Verfügung gestellt wird;
Laden (324) der signierten Softwareanwendung auf die mobile Kommunikationsvorrichtung;
Authentifizieren (328, 330) des Mehrzweckentwicklungszertifikates mit der öffentlichen Zertifizierungseinrichtung (118, 120, 304), durchgeführt durch die mobile Kommunikationsvorrichtung,
Ausführen (340) der Softwareanwendung nur, wenn der Vorrichtungsidentifizierer des Mehrzweckentwicklungszertifikates mit dem Vorrichtungsidentifizierer der mobilen Kommunikationsvorrichtung übereinstimmt und der Entwicklungsparameter gültig ist; und
wobei ein Signieren der Softwareanwendung, Laden der signierten Softwareanwendung, Authentifizieren des Mehrzweckzertifikates und Aus führen der signierten Softwareanwendung für aufeinander folgende Versionen der Softwareanwendung wiederholt werden.

2. Verfahren zum Prüfen verschiedener Versionen von Software in einer mobilen Kommunikationsvorrichtung (104, 306) gemäß Anspruch 1, wobei der Entwicklungsparameter eine Gültigkeitsperiode und das Authentifizieren ein Authentifizieren der Gültigkeitsperiode umfasst.

3. Verfahren zum Prüfen verschiedener Versionen von Software in einer mobilen Kommunikationsvorrichtung (104, 306) gemäß Anspruch 1, wobei der Entwicklungsparameter einen Download-Zähler und das Authentifizieren ein Bestimmen, ob der Download-Zähler überschritten worden ist, umfasst.

4. Verfahren zum Prüfen verschiedener Versionen von Software in einer mobilen Kommunikationsvorrichtung (104, 306) gemäß Anspruch 1, wobei das Laden über eine Luftschnittstelle zwischen der mobilen Kommunikationsvorrichtung (104, 306) und einem drahtlosen Kommunikationssystem (110) durchgeführt wird.

5. Verfahren zum Prüfen verschiedener Versionen von Software in einer mobilen Kommunikationsvorrichtung (104, 306) gemäß Anspruch 1, wobei die mobile Kommunikationsvorrichtung (104, 306) über eine sichere Softwareumgebung und einen Vorrichtungsidentifizierer verfügt, wobei das Verfahren weiterhin umfasst:
Erzeugen (316) eines Mehrzweckentwicklungszertifikates (208) für die mobile Kommunikationsvorrichtung (104, 306) in Reaktion auf die Anforderung (312), wobei das Mehrzweckentwicklungszertifikat den Vorrichtungsidentifizierer und den Entwicklungsparameter umfasst, und das Erzeugen durch eine öffentliche Zertifizierungseinrichtung (118, 304) durchgerührt wird.

6. Verfahren zum Prüfen verschiedener Versionen von Software in einer mobilen Kommunikationsvorrichtung (104, 306) gemäß Anspruch 5, wobei das Erzeugen ein Einbringen einer Gültigkeitsperiode für das Mehrzweckentwicklungszertifikat in den Entwicklungsparameter umfasst, wobei das Authentifizieren ein Authentifizieren der Gültigkeitsperiode umfasst.

7. Verfahren zum Prüfen verschiedner Versionen von Software in einer mobilen Kommunikationsvorrichtung (104, 306) gemäß Anspruch 5, wobei das Erzeugen ein Einbringen einer Tageszeitperiode für das Mehrzweckentwicklungszertifikat in den Entwicklungsparameter umfasst, wobei das Authentifizieren ein Authentifizieren der Tageszeit umfasst.

8. Verfahren zum Prüfen verschiedener Versionen von Software in einer mobilen Kommunikationsvorrichtung (104, 306) gemäß Anspruch 5, wobei das Erzeugen ein Einbringen eines Download-Zählers für das Mehrzweckentwicklungszertifikat in den Entwicklungsparameter umfasst, wobei das Authentifizieren ein Bestimmen umfasst, ob der Download-Zähler überschritten worden ist.

9. Verfahren zum Prüfen verschiedener Versionen von Software in einer mobilen Kommunikationsvorrichtung (104, 306) gemäß Anspruch 5, wobei das Laden über eine Luftschnittstelle zwischen der tragbaren Vorrichtung und einem drahtlosen Kommunikationssystem (110) durchgeführt wird.

10. Verfahren zum Prüfen verschiedener Versionen von Software in einer mobilen Kommunikationsvorrichtung (104, 306) gemäß Anspruch 5, wobei das Erzeugen ein Erzeugen des Mehrzweckentwicklungszertifikates umfasst, wenn der Vorrichtungsidentifizierer ein internationaler Mobilausrüstungsidentifizierer der mobilen Kommunikationsvorrichtung ist.

## Revendications

1. Procédé pour tester différentes versions d'un logiciel (204) dans un dispositif de communication mobile (104, 306) ayant un environnement logiciel sécurisé, le dispositif de communication mobile (104, 306) ayant un identifiant de dispositif et une clé racine émanant d'une autorité de certification publique, le procédé comprenant :
l'envoi (312) d'une demande de certificat de développement multi-usage (208) à l'autorité de certification publique (118, 120, 304), la demande incluant l'identifiant du dispositif et étant signée avec un certificat de développeur incluant un identifiant de développeur, l'envoi étant effectué par un développeur de logiciel (102, 302) ;
la réception (318) du certificat de développement multi-usage par le développeur de logiciel, le certificat de développement multi-usage spécifiant l'identifiant du développeur, un paramètre de développement et l'identifiant du dispositif;
la signature (320) d'une application logicielle (204) à tester dans le dispositif de communication mobile (104, 306) avec le certificat de développement multi-usage, de façon à produire une application logicielle signée (202) ;
le chargement (324) de l'application logicielle signée sur le dispositif de communication mobile ;
l'authentification (328, 330) du certificat de développement multi-usage auprès de l'autorité de certification publique (118, 120, 304), exécutée par le dispositif de communication mobile;
l'exécution (340) de l'application logicielle uniquement si l'identifiant de dispositif du certificat de développement multi-usage correspond à l'identifiant de dispositif du dispositif de communication mobile, et si le paramètre de développement est valide; et
où la signature de l'application logicielle, le chargement de l'application logicielle signée, l'authentification du certificat multi-usage et l'exécution de l'application logicielle signée sont répétées pour des versions successives de l'application logicielle.

2. Procédé pour tester différentes versions d'un logiciel dans un dispositif de communication mobile (104, 306) selon la revendication 1, dans lequel le paramètre de développement inclut une période de validité, l'opération d'authentification inclut l'authentification de la période de validité.

3. Procédé pour tester différentes versions d'un logiciel dans un dispositif de communication mobile (104, 306) selon la revendication 1, dans lequel le paramètre de développement inclut un compteur de téléchargement, l'opération d'authentification inclut la détermination du fait que la valeur du compteur de téléchargement a ou non été dépassée.

4. Procédé pour tester différentes versions d'un logiciel dans un dispositif de communication mobile (104, 306) selon la revendication 1, dans lequel l'opération de chargement est exécutée sur une interface radio entre le dispositif de communication mobile (104, 306) et un système de communication sans fil (110).

5. Procédé pour tester différentes versions d'un logiciel dans un dispositif de communication mobile (104, 306) selon la revendication 1, le dispositif de communication mobile (104, 306) ayant un environnement logiciel sécurisé et un identifiant de dispositif, le procédé comprenant, en outre :
la génération (316) du certificat de développement multi-usage (208) pour le dispositif de communication mobile (104, 306) en réponse à la demande (312), le certificat de développement multi-usage incluant l'identifiant de dispositif et le paramètre de développement, l'opération de génération étant effectuée par une autorité de certification publique (118, 304).

6. Procédé pour tester différentes versions d'un logiciel dans un dispositif de communication mobile (104, 306) selon la revendication 5, dans lequel l'opération de génération comprend l'inclusion d'une période de validité pour le certificat de développement multi-usage dans le paramètre de développement, l'opération d'authentification inclut l'authentification de la période de validité.

7. Procédé pour tester différentes versions d'un logiciel dans un dispositif de communication mobile (104, 306) selon la revendication 5, dans lequel l'opération de génération comprend l'inclusion d'un créneau horaire pour le certificat de développement multi-usage dans le paramètre de développement, l'opération d'authentification inclut l'authentification de l'heure.

8. Procédé pour tester différentes versions d'un logiciel dans un dispositif de communication mobile (104, 306) selon la revendication 5, dans lequel l'opération de génération comprend l'inclusion d'un compteur de téléchargement pour le certificat de développement multi-usage dans le paramètre de développement, l'opération d'authentification inclut la détermination du fait que la valeur du compteur de téléchargement a ou non été dépassée.

9. Procédé pour tester différentes versions d'un logiciel dans un dispositif de communication mobile (104, 306) selon la revendication 5, dans lequel l'opération de chargement est exécutée sur une interface radio entre le dispositif portable et un système de communication sans fil (110).

10. Procédé pour tester différentes versions d'un logiciel dans un dispositif de communication mobile (104, 306) selon la revendication 5, dans lequel l'opération de génération comprend la génération du certificat de développement multi-usage lorsque l'identifiant du dispositif est un identifiant d'équipement mobile international du dispositif de communication mobile.
